Europäisches Patentamt

European Patent Office

Office européen des brevets

(11) Veröffentlichungsnummer: **0 317 871**
**A2**

(12) **EUROPÄISCHE PATENTANMELDUNG**

(21) Anmeldenummer: 88118985.6

(22) Anmeldetag: 14.11.88

(51) Int. Cl.4: **G01N 27/22**

(30) Priorität: 24.11.87 DE 3739833

(43) Veröffentlichungstag der Anmeldung:
**31.05.89 Patentblatt 89/22**

(84) Benannte Vertragsstaaten:
**DE FR GB IT NL**

(71) Anmelder: **Siemens Aktiengesellschaft Berlin und München**
**Wittelsbacherplatz 2**
**D-8000 München 2(DE)**

(72) Erfinder: **Lange, Eckhard, Dipl.-Ing.**
**Siedlungsstrasse 1**
**D-8192 Geretsried(DE)**

(54) **Sensor zum Nachweis gasförmiger Stoffe.**

(57) Der Sensor enthält mindestens einen Kondensator, der mit einem porösen Isolator (2) als Dielektrikum gefüllt ist. Der Isolator (2) nimmt Gase und Dämpfe in dem Porenvolumen auf. Dadurch ändert sich die Dielektrizitätskonstante des Dielektrikums und damit die Impedanz des Kondensators. Über die Messung der Impedanz läßt sich das Gas qualitativ und quantitativ nachweisen.

# FIG 1

EP 0 317 871 A2

## Sensor zum Nachweis gasförmiger Stoffe

Die Erfindung betrifft einen Sensor zum Nachweis gasförmiger Stoffe.

Aus Valvo Technische Information 790 423 ist ein Feuchtesensor bekannt, der einen Kondensator enthält. In dem Feuchtesensor stellt eine beidseitig mit einem Goldfilm bedampfte Folie einen Plattenkondensator dar. Die Folie bildet das Dielektrikum des Plattenkondensators, die beiden Goldfilme bilden dessen Elektroden. Unter dem Einfluß der Luftfeuchte ändert sich die Dielektrizitätskonstante der Folie und damit die Kapazität des Kondensators. Als Folie wird Tantalpentoxid oder ein Polyimid verwendet.

Dieser Sensor ist nur zur Feuchtemessung geeignet.

Der Erfindung liegt die Aufgabe zugrunde, einen Sensor zum Nachweis gasförmiger Stoffe anzugeben mit einem Aufbau, in dem die Empfindlichkeit des Sensors für vorgegebene Gase und Dämpfe durch Wahl des Materials einer Komponente eingestellt wird.

Die Aufgabe wird erfindungsgemäß gelöst, wie dies im Anspruch 1 angegeben wird.

Der Sensor nach Anspruch 4 hat den Vorteil, daß das Gas oder der Dampf nach der Messung aus dem Dielektrikum wieder ausgetrieben werden kann.

Der Sensor nach Anspruch 5 hat den Vorteil, daß der Sensor kontrolliert bei unterschiedlicher Temperatur betrieben werden kann. Abhängig von der Temperatur ändert sich die Empfindlichkeit des Sensors.

Der Sensor nach Anspruch 6 hat den Vorzug, daß eine Vielzahl, ca. 100, an Zeolithen bekannt ist. Die verschiedenen Zeolithe unterscheiden sich in der Größe der Poren. Daher kann durch Wahl des Zeoliths der Gassensor für eine Vielzahl von Gasen empfindlich gemacht werden.

Der Sensor nach Anspruch 7 ist durch Einsatz einer Phototechnik besonders einfach herstellbar.

Weitere Ausgestaltungen der Erfindung gehen aus den übrigen Unteransprüchen hervor.

Anhand von Ausführungsbeispielen, die in den FIG dargestellt sind, wird die Erfindung im folgenden näher erläutert.

FIG 1 stellt einen Sensor dar, der einen mit einem Dielektrikum gefüllten Kondensator enthält.

FIG 2 stellt einen Sensor dar, der zwei Kondensatoren enthält.

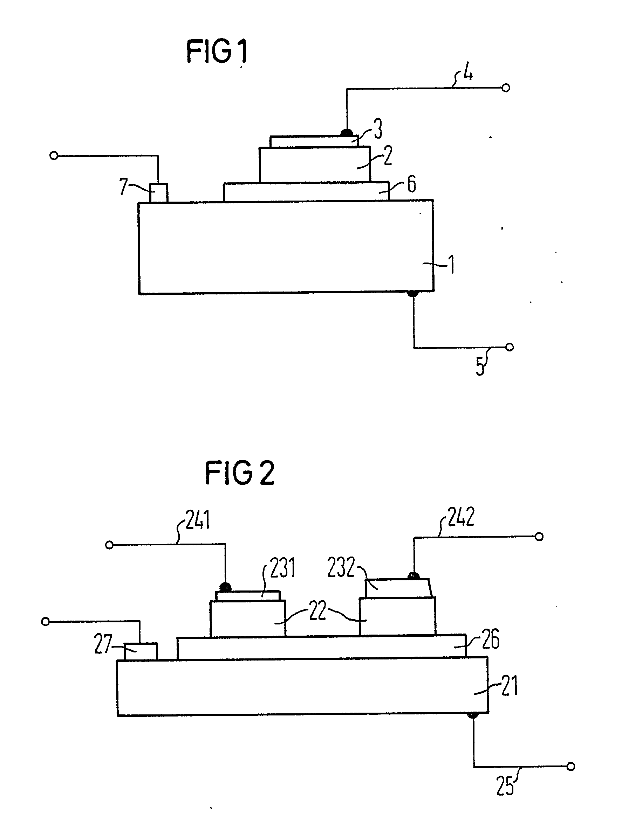

In FIG 1 ist ein Sockel 1 vorgesehen. Der Sockel 1 besteht aus Metall und ist z. B. vergoldet. Es ist ein Isolator 2 vorgesehen, der mit dem Sockel 1 elektrisch verbunden ist. Der Isolator 2 ist z. B. direkt auf dem Sockel 1 angebracht. Eine andere Möglichkeit ist, daß zwischen dem Isolator 2 und dem Sockel 1 eine Zwischenschicht vorgesehen ist. Der Isolator 2 ist porös und kann Gase oder Dämpfe aufnehmen. Der Isolator 2 ist z. B. ein Zeolith mit einer Dicke zwischen 40 µm und 100 µm. Auf den Isolator 2 folgt ein gasdurchlässiger Metallfilm 3. Der Metallfilm 3 besteht z. B. aus Gold und hat eine Dicke von z. B. etwa 10 bis 100 nm.

Es ist günstig, den Metallfilm 3 dadurch gasdurchlässig zu gestalten, daß er strukturiert ist. Der Metallfilm 3 weist beispielsweise eine Kamm-, Loch-, Streifen- oder Netzstruktur auf. Der Metallfilm 3 ist mit einem ersten Kontakt 4 versehen. Der Sockel 1 ist mit einem zweiten Kontakt 5 versehen. Der Isolator 2 stellt das Dielektrikum eines Plattenkondensators dar, der Metallfilm 3 und der Sockel 1 bilden dessen Elektroden. Die komplexe Dielektrizitätskonstante des Isolators 2 ändert sich, wenn sich der Isolator 2 mit einem Dampf oder Gas vollgesaugt hat. Darauf beruht die Empfindlichkeit des Gassensors für ein bestimmtes Gas. Es ist wichtig, daß eine möglichst große Oberfläche des Isolators 2 dem Gas ausgesetzt werden kann. Deshalb ist der Metallfilm 3 gasdurchlässig gestaltet. Das geschieht z. B. dadurch, daß der Metallfilm 3 strukturiert ist, z. B. mit einer Kamm-, Streifen-. Netz- oder Lochstruktur.

Der Isolator 2 ist z. B. ein Zeolith. Beispielsweise können zwei Zeolithe des A-Typs (KA und NaA) sowie einer des X-Typs (NaX) verwendet werden. Der Zeolith KA hat eine Porenweite von 3 Ångström, der Zeolith NaA eine Porenweite von 4 Ångström und der Zeolith NaX eine Porenweite von 9 Ångström. Diese Zeolithe sind u.a. zum Nachweis von Wasserstoff und Methan geeignet (siehe zum Beispiel W.Albertshofer, G. Horner, E. Lange. Hard & Soft - Mikroperipherik. Oktober 1986, Seite XV-XVI). Die Eigenschaft. Gase oder Dämpfe aufzunehmen. ist abhängig von der Temperatur des Isolators 2. Daher ist am Sockel 1 eine Heizung 6 angebracht. Es handelt sich dabei z. B. um eine Widerstandsheizung. Als Widerstandsheizung wird z. B. eine dotierte Siliziumschicht verwendet. Mit einem Temperaturfühler 7. der ebenfalls auf dem Sockel 1 angebracht ist, wird die Betriebstemperatur überwacht. Nach der Messung werden die Gase oder Dämpfe mit Hilfe der Heizung 6 aus dem Isolator 2 wieder ausgetrieben.

Meßgröße ist die Impedanz des Plattenkondensators bei verschiedenen Frequenzen. der aus dem Sockel 1, dem Isolator 2 und dem Metallfilm 3 gebildet wird. Zwischen dem ersten Kontakt 4 und dem zweiten Kontakt 5 wird der Wechselspannungs-

widerstand der Anordnung als Funktion der Wechsel spannungsfrequenz gemessen. Daraus wird die Impedanz der Anordnung ermittelt, in die die Dielektrizitätskonstante eingeht. Die Dielektrizitätskonstante eines mit Gas beladenen Zeoliths setzt sich anteilsmäßig zusammen aus der Dielektrizitätskonstante des reinen Zeoliths und derjenigen des reinen Gases.

Da eine Vielzahl verschiedener Zeolithe bekannt ist, die sich in der Porengröße und im weiteren Betriebsverhalten und damit der Gasempfindlichkeit unterscheiden, da darüber hinaus mit Hilfe der Temperatur unterschiedliche Gasempfindlichkeiten eingestellt werden können, ist dieser Gassensor gut geeignet, in einer Sensoranordnung verwendet zu werden. Eine solche Sensoranordnung enthält eine Vielzahl unterschiedlich empfindlicher Sensoren, die mit Hilfe einer Mustererkennungsmatrix ausgewertet werden, wie sie z. B. aus DE 35 19 436 A1, DE 35 19 435 A1, DE 35 19 410 A1 oder DE 35 19 397 A1 bekannt ist.

Eine weitere Betriebsmöglichkeit des Gassensors nutzt das dynamische Verhalten des Gassensors bei Temperaturmodulation aus. Dabei wird die Temperatur z. B. periodisch moduliert, und die Antwortfunktion des Gassensors gemessen. Zur Auswertung ist es zweckmäßig, eine Mustererkennungsmatrix zu verwenden.

Der Sockel 1 wird durch Formgebung eines Metallplättchens als Träger, das, um Korrosion zu verhindern, vergoldet wird, hergestellt. Zur Herstellung des Gassensors wird der Isolator 2 auf dem Sockel 1 als Schicht z.B. in Sedimentationstechnik, durch Aufsprühen, durch Aufpinseln oder Tauchen abgeschieden. In der Sedimentationstechnik, die aus W. Albertshofer, G.Horner, E. Lange, Hard & Soft-Mikroperipherik, Oktober 1986, Seite 15 bis 16 und aus Sensors and Actuators, Band 9 (1986) Seiten 39 - 48, bekannt ist, können Zeolithschichten mit Dicken von mindestens 40μm in der erforderlichen Homogenität hergestellt werden. Der Metallfilm 3 wird z.B. durch Aufdampfen oder Sputtern auf dem Isolator 2 aufgebracht. Durch eine Fototechnik und einen anschließenden Ätzschritt werden die Kamm- oder Lochstrukturen erzeugt. Eine alternative Möglichkeit zur Erzeugung des Metallfilms 3 besteht darin, nach einer Fotolacktechnik auf dem Isolator 2 die Oberfläche mit Metall, z.B. mit Gold, zu bedampfen und in einem Lift-off-Schritt das überschüssige Metall zu entfernen.

In FIG 2 ist ein weiterer Sockel 21 vorgesehen, der weitere Sockel 21 besteht aus Metall und ist z. B. vergoldet. Der weitere Sockel 21 ist mit einem Sockelkontakt 25 versehen. Auf den weiteren Sockel 21 folgt eine weitere Heizung 26. Die weitere Heizung 26 ist z. B. eine Widerstandsheizung. Die Widerstandsheizung ist z. B. dadurch realisiert, daß eine dotierte Siliziumschicht von einem Strom durchflossen wird. Auf dem weiteren Sockel 21 ist ferner ein weiterer Temperaturfühler 27 vorgesehen. Auf der weiteren Heizung 26 sind zwei weitere Isolatoren 22 vorgesehen. Die weiteren Isolatoren 22 sind gleicher Bauart und Dicke. Sie bestehen z. B. aus einem Zeolith und haben eine Dicke zwischen 40 μm und 100 μm.. Auf den einen weiteren Isolator 22 folgt ein erster weiterer Metallfilm 231. Der erste weitere Metallfilm 231 ist so gestaltet, daß er Gase und Dämpfe durchläßt. Der erste weitere Metallfilm 231 besteht z. B. aus Gold und hat eine Dicke von z. B. etwa 10 bis 100 nm. Der erste weitere Metallfilm 231 ist z. B. strukturiert. Durch eine Kamm-, Streifen-, Netz- oder Lochstruktur ist ein stabiler, gasdurchlässiger Aufbau des ersten weiteren Metalls 231 gewährleistet. Der erste weitere Metallfilm 231 ist mit einem ersten Metallfilmkontakt 241 versehen. Auf dem anderen weiteren Isolator 22 ist ein zweiter weiterer Metallfilm 232 vorgesehen. Der zweite weitere Metallfilm 232 ist gasundurchlässig. Der zweite weitere Metallfilm 232 besteht z. B. aus Gold. Er hat eine Dicke von z. B. mindestens 0,1 μm. Der zweite weitere Metallfilm 232 ist mit einem zweiten Metallfilmkontakt 242 versehen.

Jeder der weiteren Isolatoren 22 stellt ein Dielektrikum eines Plattenkondensators dar. Der Plattenkondensator wird im einen Fall von dem ersten weiteren Metallfilm 231, dem weiteren Isolator 22 und dem weiteren Sockel 21 gebildet. Im anderen Fall wird der Plattenkondensator von dem zweiten weiteren Metallfilm 232, dem weiteren Isolator 22 und dem weiteren Sockel 21 gebildet. Da der erste weitere Metallfilm 231 gasdurchlässig ist, kann sich der weitere Isolator 22 unter dem ersten weiteren Metallfilm 231 mit Dampf oder Gas vollsaugen. Dadurch ändert sich die komplexe Dielektrizitätskonstante des weiteren Isolators 2. Der zweite weitere Metallfilm 232 dagegen ist gasundurchlässig. Der weitere Isolator 22 unter dem zweiten weiteren Metallfilm 232 kann sich daher nicht mit Gas vollsaugen. Seine komplexe Dielektrizitätskonstante ändert sich daher nicht, wenn der Sensor einem Dampf oder Gas ausgesetzt wird. Daher können in diesem Aufbau sehr geringe Gasmengen durch Vergleich der Signale am ersten Metallfilmkontakt 241 und am zweiten Metallfilmkontakt 242 nachgewiesen werden. Da hier nur eine relative Messung der Signaländerung erfolgt, ist der Sensor empfindlicher als im Fall einer absoluten Signaländerungsmessung.

Wie im ersten Ausführungsbeispiel ist auch hier ein Betrieb bei vorgegebener oder auch variabler Betriebstemperatur möglich. Mit Hilfe des weiteren Temperaturfühlers 27 wird die Betriebstemperatur überwacht. Da erfahrungsgemäß die Betriebstemperatur höchstens auf einige Zehntel Grad konstant gehalten werden kann, kommt es zu unerwünschten Signalschwankungen. Im Ausführungsbeispiel von FIG 2 werden solche Störungen beim Vergleich des Signals am ersten Metallfilmkontakt 241 mit dem Signal am zweiten Metallfilmkontakt 242 beseitigt.

Meßgröße ist wiederum die Impedanz der Plattenkondensatoren bei verschiedenen Wechselspannungsfrequenzen.

Zwischen dem ersten Metallfilmkontakt 241 und dem Sockelkontakt 25 sowie zwischen dem zweiten Metallfilmkontakt 242 und dem Sockelkontakt 25 werden die Wechselspannungswiderstände der Anordnung als Funktion der Wechselspannungsfrequenz gemessen. Daraus werden die Impedanzen der Anordnungen ermittelt, in die die Dielektrizitätskonstanten eingehen. Die Dielektrizitätskonstante eines mit Gas beladenen Zeoliths setzt sich anteilsmäßig aus der Dielektrizitätskonstante des reinen Zeoliths und derjenigen des Gases zusammen. Daher enthält die Impedanz der Anordnung, die den ersten weiteren Metallfilm 231 enthält, Information über das Gas, in dem der Sensor betrieben wird. Die Impedanz der anderen Anordnung, die den zweiten weiteren Metallfilm 232 enthält, ist dagegen frei von einem solchen Einfluß und wird daher als Referenzgröße verwendet. Zur Auswertung der Signale ist es wiederum zweckmäßig eine Mustererkennungsmatrix zu verwenden.

**Ansprüche**

1. Sensor zum Nachweis gasförmiger Stoffe, **dadurch gekennzeichnet,** daß mindestens ein mit einem Dielektrikum gefüllter Kondensator vorgesehen ist, der einen porösen Isolator (2) mit metallischen Belegungen (1, 3) enthält.

2. Sensor nach Anspruch 1, **dadurch gekennzeichnet,** daß mindestens eine der metallischen Belegungen (1, 3) gasdurchlässig ist.

3. Sensor nach Anspruch 2, **gekennzeichnet dadurch,** daß mindestens ein Kondensator folgende Merkmale aufweist:

a) der Isolator (2) ist auf einem Sockel (1) aus Metall montiert,

b) der Isolator (2) trägt auf der dem Sockel (1) abgewandten Oberfläche einen Metallfilm (3),

c) der Metallfilm (3) ist so gestaltet, daß er für Gase und Dämpfe durchlässig ist,

d) der Metallfilm (3) ist mit einem ersten Kontakt (4) versehen,

e) der Sockel (1) ist mit einem zweiten Kontakt (5) versehen.

4. Sensor nach Anspruch 3, **gekennzeichnet durch** folgende Merkmale:

a) es ist eine Heizung (6) vorgesehen,

b) die Heizung (6) ist so am Sockel (1) angebracht, daß der Isolator (2) beheizt werden kann.

5. Sensor nach Anspruch 4, **gekennzeichnet durch** folgende Merkmale:

a) es ist ein Temperaturfühler (7) vorgesehen,

b) der Temperaturfühler (7) ist auf dem Sockel (1) angebracht.

6. Sensor nach einem der Ansprüche 1 bis 5, **dadurch gekennzeichnet,** daß der Isolator (2) ein Zeolith ist.

7. Sensor nach einem der Ansprüche 1 bis 6, **dadurch gekennzeichnet,** daß der Metallfilm (3) strukturiert ist.

8. Sensor nach einem der Ansprüche 2 bis 7, **dadurch gekennzeichnet,** daß ein weiterer Kondensator vorgesehen ist, der ebenfalls den porösen Isolator (22) als Dielektrikum enthält und dessen metallische Belegungen (232, 21) gasundurchlässig sind.

9. Sensor nach Anspruch 8, **gekennzeichnet durch** folgende Merkmale:

a) der Isolator (22) ist auf einem weiteren Sockel (21) aus Metall montiert,

b) der Isolator (22) trägt auf der dem weiteren Sockel (21) abgewandten Oberfläche einen weiteren Metallfilm (232),

c) der weitere Metallfilm (232) ist so gestaltet, daß er für Gase und Dämpfe undurchlässig ist,

d) der weitere Metallfilm (232) ist mit einem ersten weiteren Metallfilmkontakt (242) versehen,

e) der weitere Sockel (21) ist mit einem zweiten weiteren Metallfilmkontakt (25) versehen.

10. Sensor nach Anspruch 9, **gekennzeichnet durch** folgende Merkmale:

a) es ist eine weitere Heizung (26) vorgesehen,

b) die weitere Heizung (26) ist so am weiteren Sockel (21) angebracht, daß der Isolator (22) beheizt werden kann.

11. Sensor nach Anspruch 10, **gekennzeichnet durch** folgende Merkmale:

a) es ist ein weiterer Temperaturfühler (27) vorgesehen,

b) der weitere Temperaturfühler (27) ist auf dem weiteren Sockel (21) angebracht.

12. Sensor nach einem der Ansprüche 9 bis 11, **dadurch gekennzeichnet,** daß der Sockel (21) und der weitere Sockel (21) als ein Teil ausgeführt sind.

13. Sensor nach Anspruch 10 oder Anspruch 11, **dadurch gekennzeichnet,** daß der Sockel (21) und der weitere Sockel (21) als ein Teil ausgeführt sind und daß die Heizung (26) und die weitere Heizung (26) als ein Teil ausgegeführt sind.

FIG 1

FIG 2